# EUROPÄISCHE PATENTSCHRIFT

(11) **EP 0 494 046 B1**
(45) Veröffentlichungstag und Bekanntmachung des Hinweises auf die Patenterteilung: **13.04.1994**
(21) Anmeldenummer: 91810923.2
(22) Anmeldetag: 27.11.1991
(51) Int. Cl.: F16F 7/12, B61B 12/06

(54) **Vorrichtung zur Stossdämpfung für ein auf Zug beanspruchtes Seil für Steinschlag- und Schneeverbauungen**
Damping device for tensionable cable for retaining falling rocks or snowdrift
Dispositif d'amortissement pour un câble sollicité en traction en cas d'éboulis ou d'accumulation de neige

(30) Priorität: 31.12.1990 CH 4140/90
(43) Veröffentlichungstag der Anmeldung: 08.07.1992
(73) Patentinhaber: FATZER AG, CH-8590 Romanshorn (CH)
(72) Erfinder: Popp, Xaver, CH-9308 Lömmenschwil (CH); Löpfe, Theo, CH-9312 Häggenschwil (CH)
(74) Vertreter: Bosshard, Ernst

(56) Entgegenhaltungen:
- CH-A- 659 299

## Beschreibung

Die Erfindung bezieht sich auf eine Vorrichtung zur Stossdämpfung für ein auf Zug beanspruchtes Seil, für Steinschlag- und Schneeverbauungen, mit einem sich bei Ueberlast deformierenden Organ.

Für Steinschlag- und Schneeverbauungen haben sich starre Drahtseile und Drahtseil-Netze als ungeeignet erwiesen, da das Aufnahmevermögen kinetischer Energie beschränkt ist. Anderseits können die Seilquerschnitte aus Transport- und Kostengründen nicht beliebig gesteigert werden.

Aus der CH-PS 610 631 ist bereits eine auf Zug belastbare Verbindung für Drahtseile bekannt, bei der sich im Kraftübertragungsweg eine Seilschlaufe mit Klemmen befindet. Bei erhöhter Zugbelastung des Seiles entsteht zwischen den Klemmorganen und dem Seil eine Energie absorbierende Seilgleitung. Nachteilig ist jedoch, dass die Seilgleitung unerwünschterweise in relativ weiten Grenzen variiert und sich durch Rost, Temperatureinflüsse und das Kriechverhalten der verwendeten Werkstoffe ändern kann.

Die CH-PS 659 299 zeigt eine Vorrichtung zur Ueberlast-Stossdämpfung bei der ein im Seilstrang eingebautes zu einem Ring gebogenes Zwischenglied bei Belastung gestreckt wird.

Unbefriedigend sind die aufwendigen Seilverbindungsstellen und der Stoss-Dämpfungsverlauf.

Mit der Erfindung soll die Aufgabe gelöst werden, eine Vorrichtung zur Ueberlast-Stossdämpfung für Steinschlag und Schneeverbauungen zu schaffen mit einer vorbestimmbaren, weitgehend linear ansteigenden Last-Dämpfungskurve, wobei die Seilfestigkeit voll ausnützbar ist.

Diese Aufgabe wird gemäss der Erfindung dadurch gelöst, dass das Seil durch das Innere eines wendelartig geformten Rohres geschlauft und die sich überlappenden Rohrenden aussen durch ein Klemmorgan zusammengepresst sind, wobei sich bei einer Ueberbelastung des Seiles das Material des Rohres unter Verminderung des Wendeldurchmessers plastisch deformiert.

Dadurch wird erreicht, dass die Last-Dämpfungskurve über den Bereich der Seilverlängerung angenähert linear ansteigt und somit eine progressiv wirkende Aufnahme der kinetischer Energie zu Stande kommt. Dadurch wird eine ruckartige Belastung, beispielsweise durch grosse herabfallende Steine, gedämpft und aufgefangen. Zudem steht die voll Seilbruchlast zur Verfügung. Der Dämpfungsverlauf kann in weiten Grenzen durch die Dimensionierung des Rohres gewählt und vorbestimmt werden. Durch Verwendung einer auf die Wendelenden aufpressbaren Presshülse lassen sich die Rohrenden verformen und an das Seil anpressen. Dadurch entsteht ein Reibschluss zwischen Rohr und Presshülse, welcher erst nach Ueberschreiten einer Initialzugkraft überwunden wird.

In der Zeichnung sind Ausführungsbeispiele des Erfindungsgegenstandes dargestellt. Es zeigen:
Fig. 1 eine Ansicht der Vorrichtung mit Presshülse
Fig. 2 eine Draufsicht auf die Vorrichtung
Fig. 3 eine Seitenansicht der Vorrichtung
Fig. 4 eine Ausführungsvariante mit mehreren Wendellagen

Ein konventionelles Stahldrahtseil 3 wird durch einen wendelförmigen Ring 1 hindurchgeschlauft. Somit verläuft die Rohrachse entlang einer schraubenförmigen Linie. Am Seil lässt sich ein Netz od.dgl. befestigen zur Aufnahme herabfallender Steine oder Schneemassen. Die Enden des Seiles 3 werden in üblicher Weise verankert. Die beiden Endbereiche 4 des einlagigen Wendels sind überlappend ausgeführt und verlaufen zueinander parallel und tangential zur Axe des Rohres 1. Auf die beiden Rohr-Endbereiche ist eine Presshülse 2 oder Seilklemme aufgesetzt, welche die Endbereiche des Rohres zusammenhalten. Der Durchmesser des Seiles 3 ist kleiner als der Rohr-Innendurchmesser, sodass sich das Seil leicht einziehen lässt. Die Presshülse bewirkt durch ihre Verpressung eine Deformierung der beiden Rohrenden die hernach flächig gegeneinander anliegen. Durch Wahl des Wendeldurchmessers und der Rohr-Wandstärke kann die Last-Dämpfungskurve in weiten Grenzen verändert und den jeweiligen Gegebenheiten angepasst werden.

Das Rohr wird vorzugsweise als handelsübliches geschweisstes Stahlrohr (Gasrohr) oder als nahtloses Stahlrohr ausgeführt mit einem Aussendurchmesser von 25-40 mm, einem Innendurchmesser von 20-30 mm, und einer gestreckten Länge von 1000-1500 mm.

Bei einer bevorzugten Ausführungsform haben sich folgende Abmessungen bewährt: Ein geschweisstes Stahlrohr (Gasrohr) feuerverzinkt, Aussendurchmesser 33,7, Wandstärke 3,25 mm, Radius der Ringaxe ca. 172 mm, Rohrlänge im ungebogenen Zustand ca. 1200 mm, und einer Kabellänge je nach Bedarf bis ca. 50 m.

Die Breite b der vorzugsweise aus einer Aluminiumlegierung bestehenden Presshülse 2 ist grösser als der Durchmesser des Rohres 1. Die beiden Rohrenden 4 überragen die Presshülse 2 auf gegenüberliegenden Seiten.

Bei der Herstellung wird vorerst das Rohr 1 wendelförmig gebogen und die Presshülse 2 eingesetzt. Hernach wird das Stahldrahtseil 3 eingezogen. Durch unterschiedliche Verpressung der Presshülse oder Verspannung der Seilklemme kann die Lastgrenze verändert werden, bis eine Wendeldeformation und damit eine Seilverlängerung eintritt. Mit der Presshülse 2 können die beiden Rohrenden 4 so gegeneinander angepresst werden, dass zwischen diesen Rohrenden selbst und der Presshülse Reibschluss besteht.

Wenn auf das Seil eine Ueberlast einwirkt, bewirkt dies eine Verminderung des Wendeldurchmessers und eine Reibung des Rohrmantels am Pressring 2 und eine Rohrdeformierung. Der Durchmesser des Wendels wird vermindert, wobei das Rohr 1 mindestens auf einer Seite durch die Presshülse 2 hindurchgezogen wird. Durch diese plastische Materialdeformierung des Rohres 1 und die Reibung wird eine auf das Seil einwirkende Stossbelastung gedämpft und progressiv kinetische Energie abgebaut. Dadurch ist eine derartige Vorrichtung zum Auffangen herabstürzender Gesteins- oder Schneemassen geeignet, da die auf das Seil auftretende Belastung mit zunehmender Seilverlängerung progressiv abgebaut wird. Dabei kann die Seilfestigkeit voll ausgenützt werden. Bei relativ langen Seilen können mehrere derartige Wendel über die Seillänge verteilt angeordnet werden.

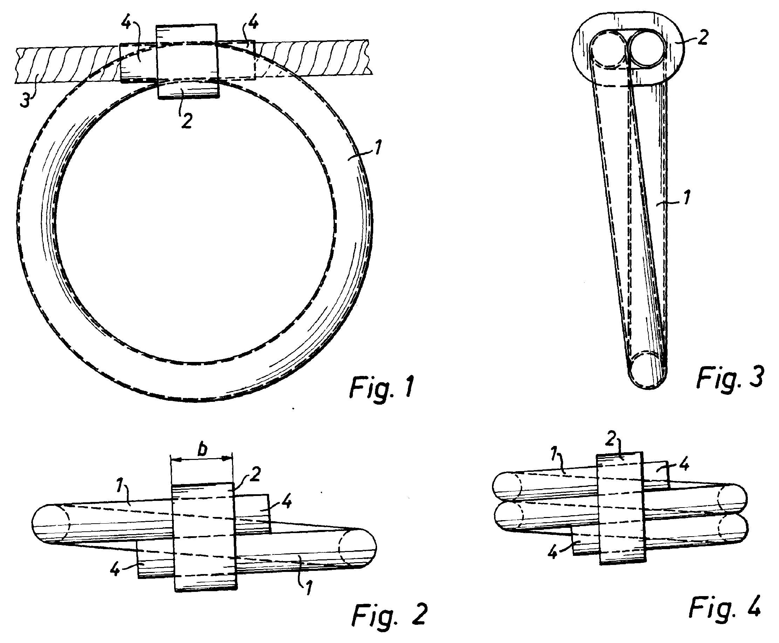

In Figur 4 ist eine Ausführungsvariante dargestellt, bei der mehrere Wendellagen vorhanden sind. Die Presshülse 2 erstreckt sich dabei über alle Wendellagen. Gegebenenfalls könnten auch noch weitere Wendellagen vorgesehen werden.

## Patentansprüche

1. Vorrichtung zur Stossdämpfung für ein auf Zug beanspruchtes Seil, für Steinschlag- und Schneeverbauungen, mit einem sich bei Ueberlast deformierenden Organ, dadurch gekennzeichnet, dass das Seil (3) durch das Innere eines wendelartig geformten Rohres (1) geschlauft und die sich überlappenden Rohrenden (4) aussen durch ein Klemmorgan (2) zusammengepresst sind, wobei sich bei einer Ueberbelastung des Seiles (3) das Material des Rohres unter Verminderung des Wendeldurchmessers plastisch deformiert.

2. Vorrichtung nach Anspruch 1, dadurch gekennzeichnet, dass das Rohr (1) eine einzige Wendellage bildet.

3. Vorrichtung nach Anspruch 1 oder 2, dadurch gekennzeichnet, dass das Klemmorgan (2) eine Aluminium-Presshülse ist.

4. Vorrichtung nach Anspruch 3, dadurch gekennzeichnet, dass die Breite (b) der Presshülse (2) grösser als der Durchmesser des Rohres (1) ist.

5. Vorrichtung nach den Ansprüchen 3 oder 4, dadurch gekennzeichnet, dass zwischen der Presshülse (2) und den beiden Rohrenden (4) Reibschluss besteht.

6. Vorrichtung nach einem der Ansprüche 1-4, dadurch gekennzeichnet, dass das Rohr (1) ein Stahlrohr mit einem Innendurchmesser von 20-30 mm, vorzugsweise etwa 25 mm und einem Aussendurchmesser von 25-40 mm, vorzugsweise etwa 33 mm und einer gestreckten Länge von 1000-1500 mm, vorzugsweise etwa 1200 mm ist.

## Claims

1. Damping device for tensionable cable for retaining falling rocks or snowdrift, having a member which deforms in the event of overloading, characterized in that the cable (3) loops through the interior of a tube (1) shaped in the manner of a coil and the overlapping tube ends (4) are pressed together on the outside by a clamping member (2) to permit, upon overload applied to the cable, plastic deformation of the tube (1) and reduction of the diameter of the coil formed thereby.

2. Device according to claim 1, characterized in that the tube (1) forms a single coil layer.

3. Device according to claim 1 or 2, characterized in that the clamping member (2) is an aluminium pressing sleeve.

4. Device according to claim 3, characterized in that the width (b) of the pressing sleeve (2) is greater than the diameter of the tube (1).

5. Device according to claim 3 or 4, characterized in that a friction fit prevails between the pressing sleeve (2) and the two tube ends (4).

6. Device according to one of claims 1-4, characterized in that the tube (1) is a steel tube having an internal diameter of 20-30 mm, preferably approximately 25 mm, and an external diameter of 25-40 mm, preferably approximately 33 mm, and a total length of 1,000-1,500 mm, preferably approximately 1,200 mm.

## Revendications

1. Dispositif d'amortissement pour un câble sollicité en traction en cas d'éboulis ou d'accumulation de la neige, comprenant une partie se déformant en cas de surcharge, caractérisé en ce que le câble (3) est enroulé à l'intérieur d'un tube (1) de forme hélicoïdale, les extrémités (4) du tube en vis-à-vis étant serrées l'une contre l'autre, à l'extérieur, par un organe de serrage (2), la matière constitutive du tube se déformant plastiquement en cas de surcharge sur le câble (3), avec réduction du diamètre d'enroulement.

2. Dispositif selon la revendication 1, caractérisé en ce que le tube (1) ne fait qu'un seul tour.

3. Dispositif selon la revendication 1 ou 2, caractérisé en ce que l'organe de serrage (2) est un manchon de serrage en aluminium.

4. Dispositif selon la revendication 3, caractérisé en ce que la largeur (b) du manchon de serrage (2) est supérieure au diamètre du tube (1).

5. Dispositif selon la revendication 3 ou 4, caractérisé en ce qu'un contact par frottement est présent entre le manchon de serrage (2) et les deux extrémités (4) du tube.

6. Dispositif selon l'une quelconque des revendications 1 à 4, caractérisé en ce que le tube (1) est un tube d'acier de diamètre intérieur compris entre 20 et 30 mm, de préférence environ 25 mm, de diamètre extérieur compris entre 25 et 40 mm, de préférence environ 33 mm, et d'une longueur avant enroulement comprise entre 1000 et 1500 mm, de préférence environ 1200 mm.
